# EUROPEAN PATENT SPECIFICATION

(11) **EP 2 010 586 B1**
(45) Date of publication and mention of the grant of the patent: **26.05.2010**
(21) Application number: 07724659.3
(22) Date of filing: 20.04.2007
(51) Int. Cl.: C08F 297/04, C08L 53/02

(54) **THERMOPLASTIC ELASTOMER COMPOSITION**
THERMOPLASTISCHE ELASTOMERZUSAMMENSETZUNG
COMPOSITION D'ÉLASTOMÈRE THERMOPLASTIQUE

(30) Priority: 21.04.2006 EP 06112872
(43) Date of publication of application: 07.01.2009
(73) Proprietor: Kraton Polymers U.S. LLC, Houston TX 77082 (US)
(72) Inventor: MUYLDERMANS, Xavier, Daniel, Dominique, Jean, B-1435 Mont St. Guibert (BE); DE GROOT, Hendrik, B-1435 Mont St. Guibert (BE); COLCHEN, Emmanuel, F-92190 Meudon (FR); SOUTHWICK, Jeffrey, G., Houston, TX 77094 (US); WRIGHT, Kathryn, J., Katy, TX 77494 (US); COIGNOUL, Emmanuelle, B-1435 Mont St. Guibert (BE)
(74) Representative: Kortekaas, Marcel C.J.A.
(86) International application number: PCT/EP2007/003730
(87) International publication number: WO 2007/122016

(56) References cited:
- EP-A- 1 674 525
- EP-A1- 1 405 877
- US-A- 5 901 615
- US-A1- 2004 127 643

## Description

The present invention relates to a thermoplastic elastomer composition comprising a specific hydrogenated styrenic block copolymer, a polyolefin mixture and, if any, a rubber softener and/or filler; a production process therefore, and molded article comprising the thermoplastic elastomer composition. The thermoplastic elastomer (TPE) composition of the present invention has an excellent combination of hardness and compression set properties. It is very particularly suitable in automobile parts, civil engineering and construction applications, home-appliance parts, sporting goods, sundry goods, stationery, and other various injection-molded and extruded articles and other wide-ranging applications that typically require a durometer hardness (ASTM D2240, expressed as Shore A), in the range of 30-90.

Thermoplastic elastomer compositions for use in automobile parts and such are known. More recently such TPE compositions based on high molecular weight block copolymers have drawn attraction. For instance, compositions based on high molecular weight block copolymers are known from e.g. the published application JP 2000103934 (MITSUBISHI CHEM CORP).
Said document actually discloses thermoplastic elastomer compositions comprising three components (i), (ii) and (iii), in which (i) is a hydrogenated product of a block copolymer having a weight average molecular weight (hereinafter referred to as "Mw") of 200 to 450 kg/mole and the content of a polymer having an Mw of 400 kg/mole or more in the block copolymer, being 5 % by weight or more, the content of a polymer having an Mw of 200 kg/mole or less in the block copolymer, being 20 % by weight or less, while the block copolymer is represented by the general formulae (1) or (2):

(1) A-(B-A)n

or

(2) (A-B)n

wherein A is a polymer block comprising a monovinyl aromatic hydrocarbon, B is a polymer block comprising a conjugated diene unit and n is an integer of 1 to 5; (ii) is a softener for rubber, and (iii) is an olefinic polymer,
wherein the weight ratio of (i)/(ii) is from 20/80 to 80/20 and the amount of (iii) is from 1 to 300 parts by weight, based on a total of 100 parts by weight (i) and (ii).

A feature that is specifically important, but not yet optimized in any of the prior art documents is the elastomeric behaviour over time at elevated temperatures (70, 100 and 125°C), expressed as compression set (ISO-815) or stress relaxation (ISO-3384)

Thus, for a given hardness of about 40-60 ShA, an ideal composition has a compression set (CS) measured over e.g. 24 hours of:

| | |
|---|---|
| at 70°C | <50% and preferably <40%, |
| at 100°C | <70% and preferably <60%, and |
| at 125°C | <80%, and preferably <70%. |

Furthermore, the long term elastic behaviour, expressed as remaining force (in % of original force) after 1000 hours compression (at 25%), measured at 70°C should be 40% or more.

The current inventors have found that a thermoplastic elastomer composition may be prepared, having appropriate thermoplastic properties, but further exhibiting an improved combination of hardness, stress relaxation and compression set, as measured over time, that meet the customers demands.

Accordingly, the present invention relates to a thermoplastic elastomer composition having a durometer hardness (ASTM D2240) of Shore A 30 to 90 comprising:
a) 100 parts by weight of a hydrogenated styrenic block copolymers (1) comprising at least two blocks (A) of a polymer containing 50 %wt or more monovinyl aromatic hydrocarbon units, and at least one selectively hydrogenated block (B) of a polymer containing 50 %wt or more conjugated diene units,
   wherein the monovinyl aromatic hydrocarbon content is in the range of from 10 to 50 wt%, based on the total weight of block copolymer,
   wherein the vinyl content in the initially prepared poly(conjugated diene) block (B) is in the range of from 30 to 80 %, and wherein the hydrogenated styrenic block copolymer has a degree of hydrogenation of at least 30% with respect to the residual olefinic unsaturation in the block (B),
   which block copolymer optionally may be mixed with a diblock copolymer having one poly(monovinyl aromatic hydrocarbon) block and one poly(conjugated diene) block , in an amount of up to 40 wt%,
b) from 20 to 150 parts by weight of a polyolefin (II); and
c) from 50 to 300 parts by weight of a rubber softener (III), preferably a paraffinic processing oil; and optionally
d) from 0 to 300 parts by weight of a filler,
   **characterized in that**
   (i) the hydrogenated styrenic block copolymer (I) is linear or radial or mixtures thereof and has a peak average apparent molecular weight of at least 250 kg/mole (ASTM D-5296), and
   (ii) the polyolefin (II) is a mixture of a high density polyethylene (IIa), having a MFR at 190°C/2.16 kg of from 5 to 50 g/10 min., and of a polypropylene (IIb), having a MFR at 230°C/2.16 kg of from 1 to 40 g/10 min., (ASTM D1238), in a weight ratio (IIa)/(IIb) of from 0.2 to 5.

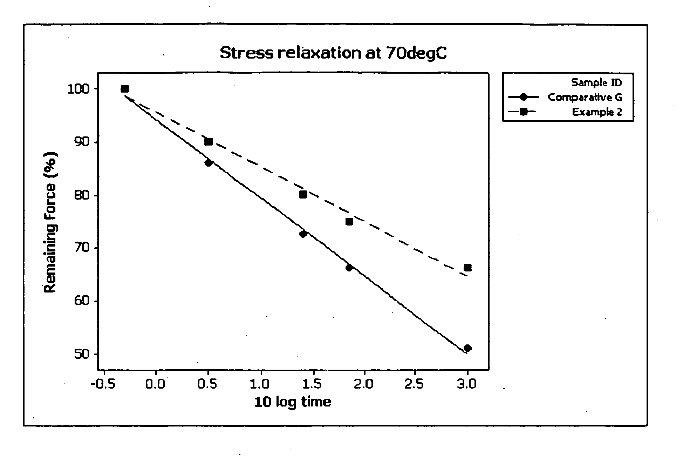

The attached figure is a graphical representation of the improvement of stress relaxation for a composition according to the present invention (Example 2) as a function of time. On the x-axis is the time (in hours) on a logarithmic scale, on the y-axis is the stress relaxation (in percentage).

By the term "apparent molecular weight" is meant the molecular weight determined by Liquid High Performance Permeation Size Exclusion Chromatography (LHPSEC) using the method according to ASTM D-5296, and is expressed in terms of polystyrene standard polymers. For anionically polymerized linear polymers, the polymer is essentially monodisperse and it is both convenient and adequate to report the peak molecular weight of the narrow molecular weight distribution, rather than the number average molecular weight or weight average molecular weight. The peak molecular weight is usually the molecular weight of the main species shown in the chromatograph. For materials to be used in the columns of the GPC, styrene-divinyl benzene gels or silica gels are commonly used and are excellent materials. Tetrahydrofuran is an excellent solvent for polymers of the type described herein. The detector used is preferably a combination ultraviolet and refractive index detector. All molecular weights are measured prior to hydrogenation which will increase the molecular weights by a small amount.

The hydrogenated block copolymer (I) is preferably selected from block copolymers that comprise at least two endblocks A, made of polymerized monovinyl aromatic hydrocarbon, thus giving a glossy (resinous) monovinyl aromatic segment, and at least one central block B composed of polymerized conjugated diene and preferably of poly(butadiene), which provides an amorphous elastomeric segment. The polymer can be linear, represented by the general formula A-B-A, or radial as represented by the general formula (A-B)_{q}X, or mixtures thereof. Linear (and radial) block copolymers may also comprise a multitude of alternating A and B blocks.

The A-B-A triblock copolymer can be made by either sequential polymerisation or by coupling of an initially prepared living block copolymer A-B.

In the sequential polymerisation the monovinyl aromatic monomer is polymerized in a first step to form a monovinyl aromatic hydrocarbon block, followed by the addition of a batch of conjugated diene and completion of the polymerisation to form a block copolymer A-B-Z, wherein Z is an active anionic polymerisation site, such as Li⁺, where after a batch of monovinyl aromatic hydrocarbon monomer is added and the polymerisation is continued until completion. The living block copolymer obtained is terminated by addition of a proton donating agent and preferably water or an alcohol, more preferably methanol. The sequential polymerisation process for the manufacture of A-B-A block copolymers has in general been disclosed in e.g. US 3231635.

The A- B-A block copolymers and (A-B)ₙX block copolymers can be manufactured by coupling of an initially prepared living block copolymer A-B-Z with a coupling agent. The manufacture of coupled A- B-A block copolymers of (A-B)ₙX block copolymers has broadly been disclosed in US5194530.

The monovinyl aromatic hydrocarbon monomer can contain from 8 to 30 carbon atoms and can consist of a single monomer or of mixtures thereof. Preferred monomers are styrene and substituted styrenes such as o-methylstyrene, p-methylstyrene, dimethylstyrene, α-methylstyrene, diphenyl ethylenes, and the like, but styrene is the most preferred monomer.

The conjugated diene can have from 4 to 8 carbon atoms and can consist of a single monomer or of mixtures thereof. Preferred monomers are 1,3-butadiene or isoprene or mixtures thereof.

In general, the polymers useful in this invention may be prepared by contacting the monomer or monomers with an organoalkali metal compound in a suitable solvent at a temperature within the range from 0°C to 100°C. Particularly effective polymerisation initiators are organolithium compounds having the general formula RLi wherein R is an aliphatic, cycloaliphatic, alkyl-substituted aromatic hydrocarbon radical having from 1 to 20 carbon atoms of which sec.butyl is preferred.

Suitable solvents include those useful in the solution polymerisation of the polymer of the present invention and include aliphatic, cycloaliphatic, alkyl-substituted cycloaliphatic, aromatic and alkyl-aromatic hydrocarbons. Suitable solvents include butane, straight or in branched pentane, hexane and heptane, cycloaliphatic hydrocarbons such as cyclopentane, cyclohexane and cyclopentane, alkyl-substituted aromatic hydrocarbons such as toluene and xylene.

It will be appreciated that during the polymerisation of the conjugated diene monomer(s), such as butadiene, they can be incorporated in the growing polymer chain in two ways. E.g. butadiene can be inserted in the 1,4-addition form or in the 1,2-addition form, the latter of which will result in the formation of vinyl groups attached to the backbone polymer chain. It is well known in the art to regulate the polymerisation toward the 1,2-addition. Broadly this can be regulated by the use of an ether or amine as known from e.g. US 3686366; US 3700748 and US 5194535 . Preferably the vinyl content is in the range of from 35 to 50 mole%.

As mentioned hereinbefore, the polymers useful in this invention may be prepared using a coupling agent. Suitable coupling agents include tin coupling agents, halogenated silicon coupling agents, alkoxysilanes and alkylalkoxysilanes, epoxy compounds such as the diglycidyl ether of bisphenol A or F, benzoic esters, halogenated alkanes and divinylbenzene, CO₂ and similar multifunctional compounds.

It will be appreciated that, depending on the coupling efficiency of the applied coupling agent, a certain amount of non-coupled terminated diblock copolymer will be present in the finally obtained block copolymer.

Preferably at least 80 wt% of the total block copolymer and more in particular from 90 to 100 wt% will be formed by the coupled triblock or radial main block copolymer (i.e. a diblock content of from 0 to 20 wt%). More preferably the diblock contents are from 0 to 5 wt%.

The thermoplastic elastomers according to the present invention are selectively hydrogenated in the sense that the aliphatic unsaturation of the B block(s) is removed for at least 80% of the residual aliphatic unsaturation whereas leaving unaffected most of the aromatic unsaturation in the A blocks. Said aliphatic unsaturation can be partially or almost completely hydrogenated. Hydrogenation processes are known from US 3113986; US 3634549; US 3670054; US 3700633; US 4226952 ; US re27145 and US 5039755.

The apparent molecular weight of the block copolymers according to the present invention is at least 250 kg/mole. For linear A- B-A block copolymers the apparent molecular weight will generally be within the range of from 250 to 700 kg/mole. It will be appreciated by a person skilled in the art that the upper limit is dictated by viscosity considerations and can be as high as acceptable for a good processability. The preferred molecular weight for linear A- B-A polymers is from 300 to 600 kg/mole, more preferably in the range of from 400 to 500 kg/mole. With radial polymers the molecular weight can be much higher since these polymers have a lower viscosity for a given total molecular weight. Thus, for radial polymers the molecular weight generally will be in the range from 250 to 1,000 kg/mole, preferably from 400 to 600 kg/mole.

If the apparent molecular weight of the block copolymer is too low, then the balance of hardness and compression set is not achieved.

The total monovinyl aromatic content of the block copolymer (e.g., blocks A) is within the range of from 10 to 50 weight percent, preferably from 20 to 35 weight percent.

Block copolymers that may be used as component a) in the present composition are commercially available. Kraton Polymers supplies the grades Kraton® G1651, G1633, G1641, MD6944 and MD6917 that will all be suitable. Kuraray provides the Septon™ grades 4055; 4077 and 4099. Asahi provides the grade N504. TSRC provides the grades Taipol™ 3151. Dynasol provides the grades Calprene™ H6170 and H6171 and Polimeri Europa provides the grade Europrene™ TH2315. Obviously, also a combination of block copolymer grades may be used, provided that the requirements of component a) are met.

The polyolefin (II) is a mixture of a high density polyethylene (IIa) and a polypropylene (IIb), in a weight ratio (IIa)/(IIb) of from 0.2 to 5, preferably of from 0.33 to 3, more preferably in a weight ratio of from 0.5 to 2. If only a high density polyethylene (HDPE) is used, then the elastic behaviour (measured as compression set at 125°C) is insufficient. Moreover, the appearance of the final molded articles is detrimentally affected. If only a polypropylene (PP) is used, then stress relaxation forces decrease faster. Again this is highly undesirable.

Polyolefins are typically defined by way of their melt mass-flow or melt volume-flow rate, using the ASTM D1238 method, which corresponds with the ISO 1133 standard. This method determines the extrusion rate of a resin through an orifice of defined dimensions at a specific temperature and load. The HDPE has a MFR at 190°C/2.16 kg of from 5 to 50, and preferably from 10 to 30 g/10 minutes. Suitable grades include Rigidex™ HD5226E from Ineos (MFR of 25 g/10min) and Unipol™ DMDA8007 from Dow (MFR of 8 g/10min).

By the same method, but now at 230°C/2.16 kg, the suitable polypropylene polymer (PP, but also copolymers of propylene and other olefins), has a MFR of from 1 to 40 and preferably from 3 to 20 g/10 min. Suitable grades include Moplen™ HP501L (MFR of 25 g/10 min) and Adstiff™ HA722L (MFR of 6 g/10min) both from Basell or H0500 (MFR of 5 g/10 min) from Huntsman.

Component (III) is the rubber softener, typically a processing oil. In order to meet the hardness requirement an amount of from 50 to 300 parts by weight (on 100 parts by weight of the block copolymer) will suffice. The presence of the rubber softener aids in the processing of the final composition and helps reduce the amount of stress relaxation. Oils which can be used are those which are compatible with the elastomeric midblock segment of the elastomeric block copolymer and which do not tend to migrate into the aromatic end-block portions to any significant degree. Thus, the most suitable oils have a higher paraffinic than naphthenic fraction. Paraffinic oils which may be used in the elastomeric composition should be capable of being melt processed with other components of the elastomeric composition without degrading. Particularly important is the ability of the final composition to be melt extruded. Suitable extending oils include white mineral oils available under the trade designations Primol™ 352 from Esso, Drakeol™ 34 from Penreco, or Ondina™ 941 from Shell. Ondina 941 has a specific gravity of 0.868 at 15°C, and a kinetic viscosity of 94 mm² at 40°C. Vegetable oils and animal oils or their derivatives may also be used.

Component (IV), the filler, is an optional component. Fillers are typically inert material that is used to reduce the overall cost of the composition, without adversely affecting the properties of the composition too much. Calcium carbonate and talc are frequently used inert fillers, but other components may be used too. Suitable grades include Durcal™ 5 from Omya or Vicron™ 25-11 from Stochem.

Not specifically mentioned but included as further optional components of the claimed thermoplastic elastomer composition are common components such as antioxidants, stabilisers, surfactants, waxes, flow promoters, solvents, processing aids, pigments, dyes and colouring agents, mold release agents and the like, which may be used in the typical amounts.

The block copolymer compositions of the present invention have been found to show a surprisingly attractive balance of physical properties for hardness, compression set, tensile strength, stress relaxation at high temperatures and a low processing viscosity, in comparison to the various prior art block copolymers.

The thermoplastic elastomeric compositions may be used for the manufacture of shaped articles and in particular those to be applied in automotive, sealing and building industry and more in particular in medical equipment obtained via injection-molding and/or extrusion. Such products are therefore also provided by this invention.

The present invention is further illustrated by the following Example .

### Examples

As used herein, the polystyrene content of a block copolymer refers to the %weight of polystyrene in the block copolymer. It is calculated by dividing the sum of molecular weight of all polystyrene blocks by the total molecular weight of the block copolymer.

The block copolymers used in the following examples are Kraton G1654, with a peak MW of less than 250 kg/mole and G1651, G1633 and MD6944, having a peak MW of greater than 250 kg/mole, the latter two having a peak MW of greater than 300 kg/mole. The HDPE grades are HD5226E and DMDA8007. Also used, for comparative purposes is Epolene™ C10, a polyethylene from Eastman, with a reported melt index of 2250 g/10min (at 190°C/2.16 kg).
The PP grades used in the examples are HP501 L, HA722L and H0500. Primol 352 and Drakeol 34 were used as oil. As filler Durcal 5 or Vicron 25-11 were used.

All compositions (in parts by weight; "pbw") were made on a twin-screw extruder, 25 mm UD49 from Werner & Pfleiderer. All ingredients were preblended in a high speed preblender (Papenmeier) for 15 minutes using the following sequence: fill preblender with the block copolymer(s), switch on preblender at high speed and add the required amount of oil over a period of 10 minutes. Stop preblender and add the solid ingredients and resume preblending for 2 minutes.
The finished Composition was then injection moulded into 6.0 mm thick sample plates (90x90x6mm). Hardness was measured on these 6.0 mm thick plates. From this plate samples were cut for compression set and stress relaxation tests.

### Comparative Examples A-D

Four compositions were made with different hydrogenated styrenic block copolymers. These compositions are included to illustrate the effect of the molecular weight of the hydrogenated block copolymer on the elastic behaviour over time at elevated temperatures. Comparative Example A was made with G1654 and its performance is not acceptable. Both the formulation and the results are given in Table 1. The formulations with G1651, G1633 and MD6944 are better, although still in need for further improvement.

**Table 1, Effect of MW of the HSBC**

| Example | A | B | C | D |
|---|---|---|---|---|
| Ingredients | | | | |
| G1654 | 100 | | | |
| G1651 | | 100 | | |
| G1633 | | | 100 | |
| MD6944 | | | | 100 |
| HP501 L (PP) | 40 | 40 | 40 | 40 |
| Primol 352 (oil) | 150 | 150 | 150 | 150 |
| CaCO₃ (filler) | 60 | 60 | 60 | 60 |

| Results | | | | |
|---|---|---|---|---|
| Hardness (Shore A) | 53 | 53 | 54 | 54 |
| Compression set in % | | | | |
| 70°C / 72 h | 58 | 42 | 36 | 36 |
| 100°C / 24 h | 90 | 63 | 46 | 47 |
| 125°C / 24 h | 100 | 75 | 60 | 60 |

### Comparative Examples D-F, Example 1

Again four compositions were made but now with MD6944 as the hydrogenated styrenic block copolymer and with different polyolefins. Comparative Example D is identical to the composition in Table 1. It has 40 pbw of a polypropylene and no polyethylene. It is therefore outside the scope of the invention. Comparative Example E contains a mix of polyolefins, but the polyethylene does not meet the requirements of the present invention. Therefore this is a composition outside the scope of the present invention. Comparative example F is a formulation with the (proper) polyethylene only and is likewise outside the scope of the invention.

The hardness of each of the formulations differs (rather significantly). The compositions of Comparative Examples D and F meet the Compression Set criteria. On the other hand, Example 1 illustrates the rather significant and surprising improvement in elastic behaviour over time. This Composition 1 according to the invention is much better than that of Comparative Examples. If on the other hand a polyethylene outside the requirements of claim 1 is chosen, as in Comparative Example E, then this improvement is not achieved. The formulations and the results are given in Table 2.

(Not all compositions contain filler. On the other hand, the filler is inert and has little effect on the hardness and on the compression set. This difference may therefore be ignored.)

**Table 2, Effect of polyolefin selection**

| Example | D | 1 | E | F |
|---|---|---|---|---|
| Ingredients | | | | |
| MD6944 | 100 | 100 | 100 | 100 |
| HP501L (PP) | 40 | | | |
| HA722L (PP) | | 20 | 20 | |
| HD5226E (HDPE) | | 20 | | 40 |
| C10 (PE) | | | 20 | |
| Primol 352 (oil) | 150 | 150 | 150 | 150 |
| CaCO₃ (filler) | 60 | | | |

| Results | | | | |
|---|---|---|---|---|
| Hardness (Shore A) | 54 | 41 | 38 | 52 |
| Compression set in % | | | | |
| 70°C / 72 h | 36 | 28 | 40 | 25 |
| 100°C / 24 h | 47 | 35 | 75 | 33 |
| 125°C / 24 h | 60 | 40 | 100 | 75 |

### Comparative Example G, Example 2

Two compositions were made but now with identical hardness. This is how products are typically evaluated by customers and clearly illustrates improvement in elastic behaviour over time at a given hardness (here 60 ShA). The formulations therefore differ slightly.

Comparative Example G is a composition comprising a polypropylene only. Again, this is outside the scope of the current invention. On the other hand, the Formulation of Example 2 comprises a mixture of polyolefins, in line with the current invention. The formulations and results are set out in Table 3. Not only can be seen that the compression set improves, but also the stress relaxation improves significantly.

**Table 3, Effect of polyolefin selection at hardness 60 ShA**

| Example | G | 2 |
|---|---|---|
| Ingredients | | |
| MD6944 | 100 | 100 |
| HP501L (PP) | 45 | |
| HA722L (PP) | | 27 |
| HD5226E (HDPE) | | 27 |
| Primol 352 (oil) | 150 | 150 |
| CaCO₃ (filler) | 60 | 60 |

| Results | | |
|---|---|---|
| Hardness (Shore A) | 60 | 60 |
| Compression set in % | | |
| 70°C / 72 h | 40 | 35 |
| 100°C / 24 h | 50 | 40 |
| 125°C / 24 h | 66 | 53 |
| Stress relaxation at 70°C (remaining force in % after 1000 hr) | 50 | 65 |

The significance of the improvement is best shown in the form of a graph, attached to this specification. It can be seen that the stress relaxation of Example 2 continues to outperform that of the Comparative example even after a great length of time.

### Comparative Examples H&J, Examples 3-4

Four compositions were made with different ingredients. Example 4 is a composition showing a formulation according to the present invention based on G1651. Comparative Examples H-J and Example 3 are based on MD6944. The results are set out in Table 4.

Example 3 clearly outperforms the Compositions of Comparative Examples H&J. Even Example 4, which is based on G1651, is better than the comparative examples.

**Table 4, Effect of polyolefin selection**

| **Example** | **H** | **J** | **3** | **4** |
|---|---|---|---|---|
| Ingredients | | | | |
| G1651 | | | | 100 |
| MD6944 | 100 | 100 | 100 | |
| H0500 (PP) | 40 | | 20 | 20 |
| DMDA8007 (HDPE) | | 40 | 20 | 20 |
| Drakeol 34 (oil) | 150 | 150 | 150 | 150 |
| CaCO₃ (filler) | 60 | 60 | 60 | 60 |

| Results | | | | |
|---|---|---|---|---|
| Hardness (Shore A) | 55 | 48 | 47 | 47 |
| Compression set in % | | | | |
| 70°C / 72 h | 37 | 23 | 29 | 27 |
| 100°C / 24 h | 57 | 59 | | |
| 125°C / 24 h | 65 | 87 | 50 | 70 |

References

• JP 2000103934 (MITSUBISHI CHEM CORP )
• US 3231635
• US 3686366
• US 3700748
• US 5194535
• US 3113986
• US 3634549
• US 3670054
• US 3700633
• US 4226952
• US re27145
• US 5039755

## Claims

1. A thermoplastic elastomer composition having a durometer hardness (ASTM D2240) of Shore A 30 to 90 comprising:
a) 100 parts by weight of a hydrogenated styrenic block copolymer (1) comprising at least two blocks (A) of a polymer containing 50 %wt or more monovinyl aromatic hydrocarbon units, and at least one selectively hydrogenated block (B) of a polymer containing 50 %wt or more conjugated diene units, wherein the monovinyl aromatic hydrocarbon content is in the range of from 10 to 50 wt%, based on the total weight of block copolymer, wherein the vinyl content in the initially prepared poly(conjugated diene) block (B) is in the range of from 30 to 80 %, and wherein the hydrogenated styrenic block copolymer has a degree of hydrogenation of at least 30% with respect to the residual olefinic unsaturation in the block (B), which block copolymer optionally may be mixed with a diblock copolymer having one poly(monovinyl aromatic hydrocarbon) block and one poly(conjugated diene) block , in an amount of up to 40 wt%,
b) from 20 to 150 parts by weight of a polyolefin (II); and
c) from 50 to 300 parts by weight of a rubber softener (III) , preferably a paraffinic processing oil; and optionally
d) from 0 to 300 parts by weight of a filler,
**characterized in that**
(i) the hydrogenated styrenic block copolymer (I) is linear or radial or mixtures thereof and has a peak average apparent molecular weight of at least 250 kg/mole (ASTM D-5296), and
(ii) the polyolefin (II) is a mixture of a high density polyethylene (IIa), having a MFR at 190[deg.]C/2.16 kg of from 5 to 50 g/10 min., and of a polypropylene (IIb), having a MFR at 230[deg.]C/2.16 kg of from 1 to 40 g/10 min., (ASTM D1238), in a weight ratio (IIa)/(IIb) of from 0.2 to 5.

2. A thermoplastic composition as claimed in claim 1 , wherein the hydrogenated styrenic block copolymer (I) has a peak average apparent molecular weight of from 300 to 600 kg/mole (ASTM D-5296).

3. A thermoplastic composition as claimed in any one of claims 1-2, wherein the high density polyethylene (IIa) has a MFR at 190°C/2.16 kg of from 10 to 30 g/10 min (ASTM D1238).

4. A thermoplastic composition as claimed in any one of claims 1-3, wherein the polypropylene (IIb), has a MFR at 230°C/2.16 kg of from 3 to 20 g/10 min. (ASTM D 1238).

5. A thermoplastic composition as claimed in any one of claims 1-4, wherein the polyolefin (II) is a mixture of a high density polyethylene (IIa) and of a polypropylene (IIb), in a weight ratio (IIa)/(IIb) of from 0.33 to 3, preferably of from 0.5 to 2.

6. Shaped articles manufactured from the thermoplastic elastomeric composition as claimed in any one of claims 1-5 via injection-molding and/or extrusion.

## Patentansprüche

1. Thermoplastische Elastomerzusammensetzung mit einer Durometerhärte (ASTM D2240) der Shore-Härte A von 30 bis 90, umfassend:
a) 100 Gewichtsteile eines hydrierten Styrolblockcopolymers (I), umfassend wenigstens zwei Blöcke (A) eines Polymers, das 50 Gewichts-% oder mehr monovinylaromatische Kohlenwasserstoffeinheiten enthält, und wenigstens einen selektiv hydrierten Block (B) eines Polymers, das 50 Gewichts-% oder mehr konjugierte Dieneinheiten enthält, worin der Gehalt an monovinylaromatischem Kohlenwasserstoff im Bereich von 10 bis 50 Gewichts-% liegt, basierend auf dem Gesamtgewicht an Blockcopolymer, worin der Vinylgehalt in dem anfangs hergestellten Poly(konjugiertes Dien)-Block (B) im Bereich von 30 bis 80 % liegt und worin das hydrierte Styrolblockcopolymer einen Hydrierungsgrad von wenigstens 30 % bezogen auf die restliche olefinische Ungesättigtheit in dem Block (B) aufweist, wobei das Blockcopolymer optional mit einem Diblockcopolymer, das einen Poly(monovinylaromatischer Kohlenwasserstoff)-Block und einen Poly(konjugiertes Dien)-Block aufweist, in einer Menge von bis zu 40 Gewichts-% gemischt werden kann,
b) 20 bis 150 Gewichtsteile eines Polyolefins (II); und
c) 50 bis 300 Gewichtsteile eines Kautschukweichmachers (III), vorzugsweise ein paraffinisches Weichmacheröl; und optional
d) 0 bis 300 Gewichtsteile eines Füllstoffes,
**dadurch charakterisiert, dass**
(i) das hydrierte Styrolblockcopolymer (I) linear oder radial oder Mischungen davon ist und ein mittleres scheinbares Molekulargewichtsmaximum von wenigstens 250 kg/mol (ASTM D-5296) aufweist, und
(ii) das Polyolefin (II) eine Mischung aus einem Niederdruckpolyethylen (IIa) mit einem MFR bei 190 °C/2,16 kg von 5 bis 50 g/10 min und aus einem Polypropylen (IIb) mit einem MFR bei 230 °C/2,16 kg von 1 bis 40 g/10 min, (ASTM D1238) in einem Gewichtsverhältnis (IIa)/(IIb) von 0,2 bis 5 ist.

2. Thermoplastische Zusammensetzung nach Anspruch 1, worin das hydrierte Styrolblockcopolymer (I) ein mittleres scheinbares Molekulargewichtsmaximum von 300 bis 600 kg/mol (ASTM D-5296) aufweist.

3. Thermoplastische Zusammensetzung nach einem der Ansprüche 1 bis 2, worin das Niederdruckpolyethylen (IIa) einen MFR bei 190 °C/2,16 kg von 10 bis 30 g/10 min (ASTM D1238) aufweist.

4. Thermoplastische Zusammensetzung nach einem der Ansprüche 1 bis 3, worin das Polypropylen (IIb) einen MFR bei 230 °C/2,16 kg von 3 bis 20 g/10 min (ASTM D1238) aufweist.

5. Thermoplastische Zusammensetzung nach einem der Ansprüche 1 bis 4, worin das Polyolefin (II) eine Mischung aus einem Niederdruckpolyethylen (IIa) und aus einem Polypropylen (IIb) in einem Gewichtsverhältnis (IIa)/(IIb) von 0,33 bis 3, vorzugsweise 0,5 bis 2 ist.

6. Formstücke, die aus der thermoplastischen elastomeren Zusammensetzung nach einem der Ansprüche 1-5 über Spritzgießen und/oder Extrudieren hergestellt sind.

## Revendications

1. Composition d'élastomère thermoplastique ayant une dureté au duromètre (ASTM D-2240) de 30 à 90 Shore A, comportant :
a) 100 parties en poids d'un copolymère séquencé styrénique hydrogéné (I) comportant au moins deux blocs (A) d'un polymère contenant 50 % en poids ou plus d'unités d'hydrocarbure aromatique de monovinyle, et au moins un bloc sélectivement hydrogéné (B) formé d'un polymère contenant 50 % en poids ou plus d'unités de diène conjugué, dans laquelle la teneur en hydrocarbure aromatique de monovinyle est dans la plage de 10 à 50 % en poids, sur la base du poids total du copolymère séquencé, dans laquelle la teneur en vinyle dans le bloc (B) de poly(diène conjugué) initialement préparé est dans la plage de 30 à 80 %, et dans laquelle le copolymère séquencé styrénique hydrogéné a un degré d'hydrogénation d'au moins 30 % par rapport à l'insaturation oléfinique résiduelle dans le bloc (B), lequel copolymère séquencé peut facultativement être mélangé avec un copolymère bi-séquencé ayant un bloc de poly(hydrocarbure aromatique de monovinyle) et un bloc de poly(diène conjugué), dans une quantité allant jusqu'à 40 % en poids,
b) de 20 à 150 parties en poids d'une polyoléfine (II), et
c) de 50 à 300 parties en poids d'un plastifiant du caoutchouc (III), de préférence une huile de traitement paraffinique, et facultativement
d) de 0 à 300 parties en poids d'une charge,
**caractérisée en ce que**
i) le copolymère séquencé styrénique hydrogéné (I) est linéaire ou radial ou des mélanges de ceux-ci, et a un poids moléculaire apparent moyen maximal d'au moins 250 kg/mole (ASTM D-5296), et
ii) la polyoléfine (II) est un mélange d'un polyéthylène à haute densité (IIa), ayant une valeur MFR à 190 C/2,16 kg de 5 à 50 g/10 min., et d'un polypropylène (IIb), ayant une valeur MFR à 230 C/2,16 kg de 1 à 40 g/10 min. (ASTM D-1238), dans un rapport de poids (IIa)/(IIb) de 0,2 à 5.

2. Composition thermoplastique telle que revendiquée dans la revendication 1, dans laquelle le copolymère séquencé styrénique hydrogéné (I) a un poids moléculaire apparent moyen maximal de 300 à 600 kg/mole (ASTM D-5296).

3. Composition thermoplastique telle que revendiquée dans l'une quelconque des revendications 1 à 2, dans laquelle le polyéthylène à haute densité (IIa) a une valeur MFR à 190 C/2,16 kg de 10 à 30 g/10 min. (ASTM D-1238).

4. Composition thermoplastique telle que revendiquée dans l'une quelconque des revendications 1 à 3, dans laquelle le polypropylène (IIb) a une valeur MFR à 230 C/2,16 kg de 3 à 20 g/10 min. (ASTM D-1238).

5. Composition thermoplastique telle que revendiquée dans l'une quelconque des revendications 1 à 4, dans laquelle la polyoléfine (II) est un mélange d'un polyéthylène à haute densité (IIa) et d'un polypropylène (IIb), dans un rapport de poids (IIa)/(IIb) de 0,33 à 3, de préférence de 0,5 à 2.

6. Articles mis en forme fabriqués à partir de la composition d'élastomère thermoplastique telle que revendiquée dans l'une quelconque des revendications 1 à 5 par moulage par injection et/ou extrusion.
